# EUROPEAN PATENT APPLICATION

(11) **EP 4 575 837 A1**
(43) Date of publication of application: **25.06.2025**
(21) Application number: 23217392.2
(22) Date of filing: 18.12.2023
(51) Int. Cl.: G06F 16/9038, G06F 16/906, G06N 3/00

(54) **SYSTEM ENABLING MANAGEMENT OF MACHINE LEARNING MODEL CONFIDENCE AND EXPLAINABILITY**

(71) Applicant: Koninklijke Philips N.V., 5656 AG Eindhoven (NL)
(72) Inventor: MANNI, Francesca, Eindhoven (NL); BUCUR, Anca Ioana Daniela, Eindhoven (NL); BUKHAREV, Aleksandr, 5656AG Eindhoven (NL); MOORTHY POOKALA VITTAL, Shiva, Eindhoven (NL); JAIN, Anshul, Eindhoven (NL)
(74) Representative: Philips Intellectual Property & Standards

(57) **Abstract**

System (TMC) and related method for trust management in machine learning based data processing, comprising an interface (IN) for receiving system input data including model input data (x) processable by a machine learning model (M) into model output data M(x). A statistical analyzer (SA) of System (TMC) is capable of computing feedback data, based on a statistical analysis of i) training data on which the model was trained, and ii) the model input data. In the said feedback data is includable a confidence measure associable with the model output. An output interface (OUT) capable of providing the feedback data to a user of the model.

## Description

### FIELD OF THE INVENTION

The invention relates to a system for trust management in machine learning based data processing, to an arrangement for data processing including such a system, to a use of such system, to a related method, to a computer program element, and to a computer readable medium.

### BACKGROUND OF THE INVENTION

According to reports by the World Bank, the WHO (World Health Organization) and others, life expectancy worldwide is ever growing, despite some dips due to higher mortality rates caused by pandemics for example, such as the Spanish flu in the late 1910s, and the very recent Covid 19 pandemic. Whilst there remain differences locally, most can expect to live on into their 70s, in some richer countries, even well into their 80s, such as in Japan, some parts of Europe, and the US for example. Whilst a welcome development, this may pose new challenges, in particular for the health care system in some places that need to cope with a larger aging population, sometimes coupled with the effects of dropping birth rates, in particular in higher income countries. Hospitals can become overwhelmed. Patients may have to wait a longer before they receive the care they need. This may affect life quality negatively.

Medical technology is one answer to this trend: improved medical equipment, such as better imaging devices and other sophisticated medical devices have played their part in making treatment quicker, cheaper and available to a larger number. Some such medical devices rely on computerized support. Indeed, it is often the underlying computerized infrastructures that drives this higher efficiency in treatment and therapy. For example, computational power is harnessed to control a medical device more efficiently. Specifically, computing solutions may help medical professionals detect more reliably and quicker medical conditions. For example, screening for breast cancer, or screening medical imagery for other diseases, have become quite accurate and can deliver results within minutes. However, workload is set to increase even further, due to increasing demand and pressures on the health care system. If workload is overstretched, user fatigue may set in which can have devastating consequences for patients, for example if conditions are not diagnosed on time or not at all.

Of late, computation-based aids have been developed that use machine learning ("ML") models, configured to help the medical professional achieve higher throughput, at good success and accuracy rates in diagnostic or therapeutic decision making. Such machine learning models have been trained on training data in order to enable such models to detect patterns such as signs/signatures of the presence of a medical condition, based on input data such as lab data, patient records, medical imagery, or on other pertinent data. To date, some of those machine learning models that are used to help in disease detection for example have remained a "black box" to many: it is not easily ascertainable why a given machine learning model reaches the conclusion it does. Also, it is often unclear what the quality of the training data was that was used to train the model. The data may have been drawing from a distribution which may have little relevance to cases in a given medical facility that that sees patients with different profiles than those whose data was used by an ML vendor to train their ML model. "Out of distribution" risks can thus arise. This can pose difficulties for medical facilities such as hospitals when wishing to acquire and use such ML-based-equipment. It is a challenge to objectively judge safety, trust and fitness for purpose of a given trained ML model.

Similar such challenges and risks are not necessarily confined to the medical realm, but may arise also in the context of other mission critical applications, such as in autonomous driving solutions in the automotive sector, and in many other domains, where machine learning models are involved in critical decision making.

### SUMMARY OF THE INVENTION

Thus, there may be a need for more efficient use for machine learning models in various settings or domains, such as in medical, automotive, aerospace, pharmaceutical, processing engineering, etc.

An object of the present invention is achieved by the subject matter of the independent claims where further embodiments are incorporated in the dependent claims. It should be noted that the following described aspect of the invention equally applies to the arrangement including such as system, to the use of such a system, to the method , to the computer program element and to the computer readable medium.

According to a first aspect of the invention there is provided a system for trust management in machine learning based data processing, comprising:
- an interface for receiving system input data including model input data processable by a machine learning model into model output data;
- a statistical analyzer capable of computing feedback data, based on a statistical analysis of i) training data on which the model was trained, and ii) the model input data, wherein in the said feedback data is includable a confidence measure associable with the model output; and
- an output interface capable of providing the feedback data for facilitating trust management.

The feedback data is preferably provided to a user of the model. The user may have requested the model output. Alternatively, or instead, the feedback data is passed on for processing by other entity, such as an operational management system that manages a set (ecosystem) or machine learning models.

The system allows preferably real-time trust management. For example, the feedback data is preferably provided to a computing device used by a user who requested the model's output, and who may have provided the model input data. The feedback data is configured to furnishes trust information that relates to the model output. The user can better judge how such output can be trusted, to what extent it can be relied upon, the risk that the use of such data may implicate. etc. Thus, the system may facilitate safer use of machine learning models in general, in particular safe use of the output that such models provide.

In embodiments, the feedback data is so provided alongside at least a part of the model output data and/or model input data.

In embodiments, the statistical analyzer, in the said statistical analysis, capable to establish whether the training data and the model input data are out-of-distribution ("OOD").

In embodiments, the said system input data further includes a model output explainability measure associable with the model output, and wherein the said statistical analysis for OOD is based at least in part on the output explainability measure.

Explainability measure may be a per feature measure, with at least one such measure (score, or other quantification) per feature if there are plural such features. "*feature*" may be a region in an image or other spatial data, or may relate to other aspect of data, if not spatial, such as in tabular data.

What are features or tabular data? Can you give examples or perhaps a more general def on what we look for in tab data?

In embodiments, the feedback data further includes the, or a, model output explainability measure.

In embodiments, the explainability measure is configured to measure a contribution of a feature of the model input data to the model output data.

In embodiments, the statistical analyzer capable of computing the confidence measure as a calibrated confidence measure for the output data, based and the statistical analysis.

The statistical analysis may be further based on data quality metric of the model input data or training/testing data in respect of model, or may be further based on feature(s) of model input data that are identified by the explainability measure to having contributing to the trained model's model output.

The statistical analysis may be based on the features that contribute to the explainability (in the model output at inference/deployment) and which are also contributing in respect of output of the originally trained model.

In embodiments, the calibrated measure is different to, or substantially equal to, an earlier initial confidence measure receivable at the input interface.

In embodiments, the calibrated confidence measure for the output data is based on the, or a, feature in the input data to which the explainability measure pertains.

Explainability measure may relate to the model used in deployment, and the originally trained model.

In embodiments, the calibrated confidence measure is lower than the (initial) confidence measure received.

In embodiments the system is capable of providing in the feedback data an indication of retraining data requirable for a retraining of the model, in order to achieve a higher confidence measure.

In embodiments the system is capable of providing in the feedback data an indication that retraining may be needed.

In embodiments, at least a part of the said system input data is receivable via a user interface.

In embodiments, the feedback data further includes data quality metric in relation to the training data and/or model input data.

In embodiments, the model input data includes tabular data.

In embodiments, the model input and/or output data includes medical data.
In embodiments, the feedback data is provided as an alert or confirmatory signal, based on the statistical analysis.

In embodiments, a visualizer (for example of the system) is capable of visualizing at least a part of the feedback data on a display device, or wherein at least a part of the feedback data is provided by a transducer other than a display device as a user perceivable feedback signal.

In another aspect there is provided an arrangement for data processing, comprising the system of any one of the above mentioned embodiments, and any one or more of i) the display device, ii) one or more metric providers, providing the confidence and/or the explainability measure, iii) the display device , iv) data storage on which is stored at least a part of the training data and/or the machine learning model, v) a training or testing system on which the model was trained, vi) an operational management system configured to ensure trust level across an ecosystem of machine learning models, based on the feedback data.

In another aspect there is provided a method for trust management in machine learning based data processing, comprising:
- receiving overall system input data including model input data (x) processable by a machine learning model into model output data;
- computing feedback data, based on a statistical analysis of i) training data on which the model was trained, and ii) the model input data, wherein in the said feedback data is includable a confidence measure associable with the model output; and
- providing the feedback data to a user of the model for facilitating trust management.

In yet another aspect there is provided a use of the system of any one of the above mentioned embodiments in operating a trained machine learning model in deployment or in relation to testing.

In yet another aspect there is provided a computer program element, which, when being executed by at least one computing system, is adapted to cause the computing system to perform the method.

At least one computer readable medium having stored thereon the program element.

It will be understood that the principles described herein are not necessarily confined to the medical field. Indeed, the proposed setup can be used to improve any other computer assisted operations based on machine learning models, such as may be used to control or facilitate operation of industrial facilities, production sites, manufacturing, etc.

For example, machine learning models may be used to validate chip designs, may be used in autonomous aviation or automotive, may be used in chemical plants to control processes, or in pharmaceutical settings for drug design and others. Any of such applications and others are envisaged herein. In general application of the proposed system and method are envisaged, in particular for mission critical safety related applications, where quality of the output of machine learning models is of relevance.

*"user"* relates to a person, such as medical personnel or other, operating the ML model, eg, requesting the output from ML, such as an aid to a medical decision making, etc.

In general, the term *"machine learning"* includes a computerized arrangement (or module) that implements a machine learning ("ML") algorithm. Some such ML algorithms operate to adjust a machine learning model that is configured to perform ("learn") a task. Other ML operate direct on training data, not necessarily using such as model. This adjusting or updating of the model is called "training". In general task performance by the ML module may improve measurably, with training experience. Training experience may include suitable training data and exposure of the model to such data. Task performance may improve the better the data represents the task to be learned. Training experience helps improve performance if the training data well represents a distribution of examples over which the final system performance is measured. See for example, T. M. Mitchell, "Machine Learning", page 2, section 1.1, page 6 1.2.1, McGraw-Hill, 1997. The performance may be measured by objective tests based on output produced by the module in response to feeding the module with test data. The performance may be defined in terms of a certain error rate to be achieved for the given test data.

*"data"* as used herein may relate to any one of: i) training data, ii) test data or iii) deployment data in respect of a ML model. Each such data (training data, test data or deployment data) includes respective in-and output.

*"Training", "testing"* and *"deployment (also sometimes called "inference")* " relate to different phases of use of a ML model. First there is training phase, then testing phase and, once testing reveal satisfactory performance, there is deployment phase, where the model operates in its intended use (eg, medical, in-clinic, etc). In general, different data is used in any two of the training, testing and deployment phases.

"*Explainability [measure]"* relates to any metric, score etc, that quantifies or rationalizes why an ML model returned the output it did, based on a specific input. In general, the explainability - measure may identify features in the input data that may have contributed in the model returning the output it did. Whilst all features may be said to contribute to some extent, the measure herein is so configured so as to identify those feature(s) that contribute more than other(s). The measure may quantify such contribution in numerical terms and/or identify such feature(s) in graphical terms, such as in explainability maps or others.

*"Confidence measure"* relates to any quantification of uncertainty that is associable with a given ML model's output it returned based on input. The measure may be in percentage terms, a score in a bound range (eg, unit interval, or other), probability, etc. The confidence measure may be supplied by the model itself as an additional output with the payload output (the output data that answers the purpose for using the model), or it may be implicit in the output itself, such as in classification into labels. In other cases, the confidence measure is determined separately, based on statistical or other techniques, based on in particular any one or more of input, the test/training data, the model's architecture, etc.

### BRIEF DESCRIPTION OF THE DRAWINGS

Exemplary embodiments of the invention will now be described with reference to the following drawings, which, unless stated otherwise, are not to scale, wherein:
Fig. 1 shows a block diagram of system based on services that can use machine learning models;
Fig. 2 shows an arrangement including a trust management component for use with machine learning models;
Figs 3 and 4 provide more details of the trust management component of Fig. 2;
Fig. 5 illustrates an explainability measure determination in respect of a machine learning model; and
Figs 6 and 7 show flow charts of a method of data processing. In particular, Fig. 6 shows a flow chart of training a machine learning model, whilst Fig. 7 shows a flow chart of a method of providing feedback data in relation to output provided by the trained machine learning model.

### DETAILED DESCRIPTION OF EMBODIMENTS

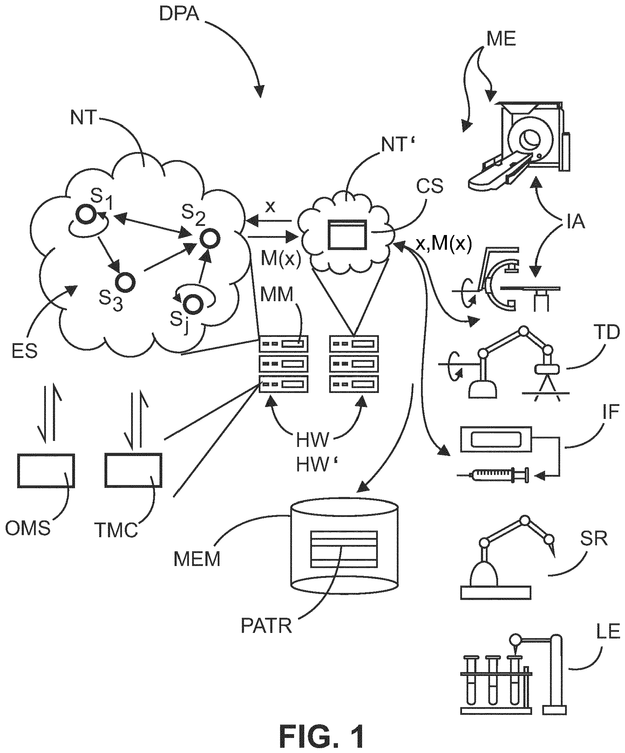

With reference to Fig. 1, this shows a block diagram of a data processing (computing) arrangement DPA, as may be used in any one of various domains such as medical, engineering, production, manufacturing and others. However, for the sake of illustration, the following will be mainly focusing on medical applications in the medical domain, but again, this is not at the exclusion of embodiments of the said other domains.

Specifically, the data processing arrangement DPA may be part of, or may be interfaceable with, a hospital information system ("HIS"), a picture archiving and communication system ("PACS"), or with any other computing infrastructure across one or more medical facilities, such as hospitals, GP practices, medical research centers, or any other.

Briefly, and as will be explained in more detail below, the arrangement DPA is envisaged to include a trust management system (component) TMC that is operable to facilitate safe operation of computing services. Specifically, and in some embodiments, some such services may be based on suitably configured ("trained") machine learning ("ML") models that may have been sourced from various providers or vendors, etc. The trust management component TMC is operable to provide trust related information to use of the model. The trust related information may allow user to better asses in an objective, reproducible manner, the trust that can be reasonably associated with a model's output, how reliable such output may, the risks involved, etc. Assurances or knowledge about such trust or risk may be an asset in mission-critical, safety related application, such as is the case in the medical domain where computing related tasks may be procured from such services to support or enable tasks such as diagnosis, therapy, planning, etc. Such or similar tasks may have a direct or indirect impact on patient health.

Before explaining operation of the trust management component TMC in more detail, continued reference is made first to the arrangement DPA in more general, to illustrate one exemplary context in which the trust management component TMC may be put to good use. In some, but not all, embodiments, the data processing arrangement is preferably cloud based. In such cloud-based computing solutions, there may be one or more services S 1-S3, Sj realized. Such service or services may be referred herein as "Sj" generically. In the following we will simply refer to at times to "the services Sj" for convenience, with the understanding that there may be only a single such service, and the disclosure is equally applicable to such service Sj.

The (one or more) services Sj may be provided in a cloud-computing network NT. The cloud computing network NT may be supported by one or more items of hardware equipment HW, such one or more servers, or any other computing device(s). Such hardware HW may include memory source(s), in which data x is loadable, and circuitry (processors) such as CPUs, or more dedicated processor types such as TPUs, GPUs, which process such data to produce processed data of interest M(x). Input data *x,x'* can be received and provided through suitable input/output interfaces, BUS systems, network interfaces, etc.

Some or each service Sj may have its own computing device, but this is not necessary as one single or multiple computing devices HW may support multiple services, the number of services in general exceeding the number of underlying, implementing, hardware HW. For example, a single hardware may be used to support multiple services, although this is rare and, more usual, multiple hardware HW items, such as servers, may be interconnected to reduce latency by load balancing or other measures to manage surges of requests for example, or to improve resilience against outages, etc.

Some or each service Sj may be implementable by suitably configured software that is run (executed) by the said one more or more items of hardware HW. That being said, purely hardware-based services are not excluded herein, and neither are "hybrid" services that are arranged in hardware and software. Each service Sj may be characterized as the computer/computing-implemented performance of a task based on input *x.* The task is served by providing relevant output *M(x)* (the reason for this notation will be come apparent shortly).

The one or more services Sj may be requested by consumer CS, such as a client device, which may be arranged in its own cloud NT', and supported by its own hardware HW'. The two networks NT, NT' and hardware HW, HW' are shown separately for ease of exposition, and this may be indeed so in some embodiments. However, such separation is not a necessity herein. That is, in some embodiments, there may be a single one network, so that the networks NT and NT' are identical and form a single network, supported by one or more hardware infrastructure. The client device CS may be one of the services Sj.

What is more, the services Sj may not only provide results to the task seeking consumer or client CS, but may instead, or in addition, provide their output to other one or more of the services Sj, as indicated by the arrows in cloud NT. The cloud NT may be part of the internet, an intranet or extranet, or of a local area network of a medical clinic or any other medical facility.

The client CS may be part of the or a HIS or PACS, or any other information technology system. The client CS may be configured for interfacing with one or more medical equipment, or other.

The client device CS may operate for example in an intranet NT', internet or any other wide area network WAN, but any other network infrastructure is also included herein, not necessarily based on the TCP/IP and HTTP protocols. A browser may be used by client CS to collect input data x, and/or for requesting output data M(x) for the pertinent task at hand from services Sj, based on input data x. Any one or both of networks NT, NT' may be wireless, or wired, or may be arranged as a hybrid network which includes wired and wireless components. The client device HW for client CS may be a laptop, a desktop computer, a tablet, a smart phone or any other computing device operable by a medical user such as a medical professional, a radiologist, etc.

The (one or more) consumer CS may be interfaced with one or more display devices DD (not shown) in which the input x and/or the service Sj-provided output M(x) may be visualized. Thus, the requested output data M(x) may be notified to user first, such as by visualization, displaying, or other. If approved by user, such data M(x) may then be caused by user to be forwarded to applicable equipment ME in order to effect treatment, diagnostic work, or other medical operation, as needed. Alternatively, the services Sj themselves interface with some such equipment ME in an autonomous setup. For example, the output data M(x) is provided to equipment(s) ME by services Sj to effect treatment, diagnostic work, or other medical operation automatically, as needed.

The client CS may be an autonomous device or service, or a user operated device/service, seeking a task to be performed by the one or more of the services Sj in cloud NT. The client CS sends out the request preferably including input data x which is transmitted through a network NT, N' and processed by one or more of the services Sj to deliver as result output data M(x). Output data M(x) may be sent back to the requesting client CS, or output M(x) may be sent to another network destination as specifiable by user CS. Although a single task may be sought by the client, one or more additional services may be involved which may exchange intermediate data in orchestrated execution of the task, until the final result is obtained which is then sent back to the client CS or other destination. The intermediate data may or may not be transferred to the client CS.

In general, the client CS requested task is preferably computational and may include for example, in the medical domain, the computation of a diagnostic result M(x) given medical input data x such as imagery or lab data, patient health record or report, or any other pertinent input data x for which the one or more services Sj is configured processing. In addition, or instead, such task may involve determining output data M(x) as suitable control parameter(s) to control medical equipment ME, such as a medical imaging apparatus IA. Such medical imaging apparatus may include any one or more of a CT (computed tomography) scanner, (magnetic resonance imaging) MRI scanner, X-ray radiography apparatus, a mammography apparatus, ultrasound (US), or any other. In such application scenarios, the control parameters may include imaging parameters such as amperage and voltage settings for an X-ray ray source SS, voltages or amperages for driving RF coils in MRI imaging equipment, etc. In addition or instead, such parameter may relate to radiation treatment or imaging planning data.

The above-mentioned various parameter(s) may be provided by the services as output M(x) to serve the task, or such parameter(s) may be received by service Sj as input x to provide other medically relevant output data M(x)' to so serve the task.

The medical equipment ME may include one or more medical data storage facilities MEM, such as PACS or others, in which patient records PATR are held and which may be retrieved therefrom, and passed as input x for processing by services Sj to produce output M(x).

Other medical equipment ME with which the client may be interfacing to pass on data β obtained from the one or more services Sj, based on processing input x by such services Sj, may include laboratory equipment LE. The output β provided by services Sj may include control data to control operation of such lab (laboratory) equipment LE. The lab equipment LE may include a spectrometer, automated assaying machine, or any other analytical equipment to analyze tissue sample, body fluids, etc. Alternatively, or instead, input data x to such services Sj may include measurement data obtained by such lab equipment LE. In this case, the output M(x) may relate to therapy, planning or image data, based on diagnostic data x received at input from such lab equipment, or from medical data storage MEM in which such lab data may be held as mentioned above, etc.

Yet other medical equipment ME, with which the client CS may interface to pass on requested output date M(x) obtained from services Sj, may include a treatment device TD, such as a linear accelerator linac or other, for delivering radiotherapy. The requested data β may include a treatment plan, with specifications of fractions, and/or control data for a multi-leaf collimator. Another option of treatment delivery medical equipment ME for which the client CS may be interfacing with services Sj to obtain control data M(x) may include a surgical robot SR. For example, based on input data x, such as image data and/or patient record data, control or planning data M(x) is computed for the surgical apparatus SR. For example, the surgical robot SR may need planning data M(x) such as co-ordinates in order to control the surgical robot for an intervention in relation to a given patient whose data x has been supplied for processing by service Sj. Such planning data may instead or in addition be computed for imaging apparatus IA, so as to obtain space coordinates for the region of interest to be scanned or treated, etc. In addition, or instead, the mentioned lab equipment may be in need for control parameters M(x) to control an assay procedure, or a procedure of any other measuring device that may support lab analytic work in a clinical or pharmaceutical setting, etc.

Other embodiments of medical equipment ME which may be served by services Sj with data M(x) may include an imaging facilitator device IF, such as a contrast agent pump device that is operable to release contrast agent in order to enhance contrast in imaging results.

Yet other types of medical equipment may include other computing devices, such as a scheduler to schedule patient appointments and follow-up appointments as often needed in a clinical facility, in particular in relation to one or more related imaging sessions, or in relation to treatment delivery appointments, such as for the various fractions in the above mentioned radiotherapy LD embodiment.

In some embodiments frequently used, the input data x passed on from the consumer CS for processing by the services may include image data such as X-ray or other projection imagery, reconstructed 3D volumes, patient records, including patient bio-characteristics, laboratory data with measurements or requirements. The input data x which is passed from the client for processing into the cloud by the services may be retrieved from any one of the medical equipment such as medical imager, or may be retrieved from storage devices, such as the mentioned PACS or from any other medical storage repositories MEM. Patient data including patient characteristics PATR such as height, weight, BMI, medical history, etc may retrieved from suitable medical databases by interfacing therewith and executing a suitable search request.

The output data M(x) as provided by the one or more services Sj that process such input data x may include in general data that facilitates clinical work to timely deliver the health care needed for patient. For example, such clinical/medical output data M(x) may include decision data, such as diagnostic or therapy decision data, control parameters needed to operate safely any one or more of the mentioned or other medical equipment ME in order to deliver, in an efficient and safety-managed manner, health care tasks in relation to patients.

Seamless inter-operation of services Sj may be preferable herein. This may be ensured by an operational management system OMS that orchestrates, federates, or otherwise coordinates operation of the one or more services Sj, in order to obtain the result M(x) sought by the client CS. For example, the requested task may be implemented by a single or multiple services in orchestrated cooperation. The operational management system OMS, which may itself be implemented by one or plural services supported by one or more servers or any other computing devices, may be operable to ensure suitable interfacing between two or more of the services Sj operable under such orchestration to perform the requested task.

For example, the management service MS may provide interfacing information for seamless integration among services for delivering the client CS requested task. For example, the operational management system OMS may provide API's, data reformatting, authentication or any other supporting operation that allow information to be exchanged between the services and/or with the task seeking client CS. Any suitable communication protocol and interfacing techniques may be envisaged herein for management service/system MS. Thus, the cloud NT may operate as a cloud computing setup, mainly under a "software as a service" design (SaaS), but other designs, such as one or more of web services, platform services or storage services are not excluded herein.

However, as will be explained in more detail below, the above-mentioned facilitation of seamless operation and interfacing among services Sj is optional, although much preferred. What is mainly envisaged herein is for the management service MS to ensure consistency of service performance levels in connection with the task requested by the client CS. Thus, instead of, or in addition to, the infrastructural support in terms of seamless interfacing between the services mentioned above, management service MS is operable to ensure or facilitate a predefined quality level of the final output M(x) (and, optionally, of intermediate output(s), if any) that is provided by the services Sj. Such output data M(x) ought to comply with certain regulations in order to ensure meaningful and consistent task performance across service Sj and/or in respect of the medical task at hand. Such output data M(x) consistency is of consideration in particular in mission critical applications, such as is the case in the medical domain, where the output data, or any intermediate data, may relate to diagnostic or therapy decisions, planning data, etc.

The quality of data may be determinative of a favorable health outcome for patients. If the prescribed level of service, in particular data quality level, is not maintained, this can have undesirable consequences, such as patient not receiving the care that they need, or that expensive medical equipment ME is subjected to unnecessary wear-and-tear. For example, a wrongly, unnecessarily, incompletely or otherwise deficiently conducted imaging operation due to bad data M(x) (such as planning or diagnostic or therapy decision data) may not only yield sub-par health results, but the imaging operation may need to be rerun. Thus, an image retake may be required, that would have been avoidable had there been good data M(x) in the first place. For example, the bad data may relate to wrong imaging or planning settings, wrong diagnoses, etc. Apart from being detrimental to patient health, such image retake may put unnecessary strain on components of the imaging apparatus IA, thus yielding premature breakdown or may attract otherwise unnecessary maintenance work. For example, an anode disk in an X-ray imaging apparatus IA is subjected to considerable temperature gradients which may cause this component to wear out prematurely and may be in need of replacement way before its planned lifetime, if too many retakes are needed. Similar in other imaging modalities, for example, in an MRI apparatus, where coils and their fixtures are subjected to considerable Lorentz forces, caused by the large magnetic field strengths and rapidly changing coil currents that are needed to operate such imaging modality. It is also treatment delivery devices TD that may suffer from premature wear-and-tear defects due to bad data β as may be provided by the service Sj, if it wasn't for operational management system OMS.

The trust management system TMC may be part of the operational management system OMS, or may be separate therefrom, and not related to the operational management system OMS.

In order to explain operation of the proposed trust management system TMC in more detail, some further context may be needed first, in particular on ML more generally. Some of the mentioned services Sj may use trained machine learning models M in order to perform the task at hand. Some such models M may include for example artificial neural networks, decision trees, support vector machines, regressive type models, generative type networks, such as GANs, language models, foundation models, or discriminative type models such as classifiers, or indeed any other type of machine learning model suitable for the intended computational task.

The machine learning model may have been trained on training data *d*, and may have been tested on test data *d*', before they can be used, such as in the cloud computing service NT or in any other way. For example, the machine learning model M may have been trained to process patient imagery, such x-ray or magnetic resonance imagery, in order to detect the presence of one or more diseases. In short, such model M which implements a diagnostic service Sj, may have been trained to perform a diagnostic task, by computing a diagnostic result M(x). Such result M(x) which may be one example of a result that may be requested by client CS. Alternatively, this diagnostic result may be intermediate data as it may be fed into another machine learning model of another one or more of the services, in order to compute control parameters, such as a treatment plan, for radiation therapy, based on the computed diagnostic result, etc. Such treatment plan may include a set of parameters that may be applied to the linac in order to irradiate the diseased site from suitable angles at appropriate radiation doses for example. In this example, it can be seen that both instances of output data, the diagnostic result and control parameters (treatment plan) for treatment delivery apparatus TD are mission critical. Thus, preferably, the output M(x) so provided based on one or more trained machine learning models M ought to be meaningful, truthful, valid and accurate. In short, it ought to be trustworthy. Otherwise, there may be sub-par health care results, and/or medical equipment ME is unnecessarily subjected to wear-and-tear as explained earlier.

The cloud computing network NT may support an eco-system ES of prior approved or validated services Sj, and it is only such approved or validated services Sj that are allowed to be present in the eco-system ES. That is, only such services are useable by the client CS to so ensure requisite performance level. If machine learning models are used in implementing any one or more of the services, it ought to be assured that the said one or more machine learning models are up to the task and operate at a requisite minimum performance level and trust level. In other words, the quality of the output data provided by such trained machine learning models ought to be of a predefined quality. The proposed trust management component/system TMC is configured herein to be capable to facilitate adherence to a given data quality level, in particular when new services S', based on new trained machine learning models, are to be added to an existing eco-system ES of one or more service Sj and their one or more models M.

Trust management data as producible by the trust management system TMC may be used by the operational management system OMS for operational tasks, such for example policing the requisite trust level. For example, based on the trust management data, the operational management system OMS may operate to remove/block certain models from the eco-system ES, admit/re-admit models into the eco-system ES, request retraining of given models found deficient in terms of trust level, etc.

Whilst operation of the trust management system TMC is mainly explained in the context of cloud-computing using services Sj, this is not a necessity herein, as the trust management system TMC can be used in any computational setup that is based on machine learning models, and where there is a need to manage trust in relation to the ML model output for the task at hand, etc.

The data processing arrangement DPA in Fig. 1 may thus include the trust management system/component TMC that fosters safer use of trained machine learning model M, in particular in above mentioned services Sj or in other computing arrangement, system or device, that may be reliant on such model for their operation.

Thus, for example, consumer Sj device or system, etc, operable by a user, such as by medical personnel, may safely use output M(x) of trained machine learning model in various clinical applications, such as those mentioned above in connection with Fig. 1, but also others. The output M(x) by model M is returned in response to user proving input x for the model M to process, such as when user seeks support in clinical decision making.

Broadly, and as will be explored in more detail below, the trust management component TMC fosters such safer operation by providing context information so that users can better gauge the relevance and safety of output M(x) provided by the machine learning model M.

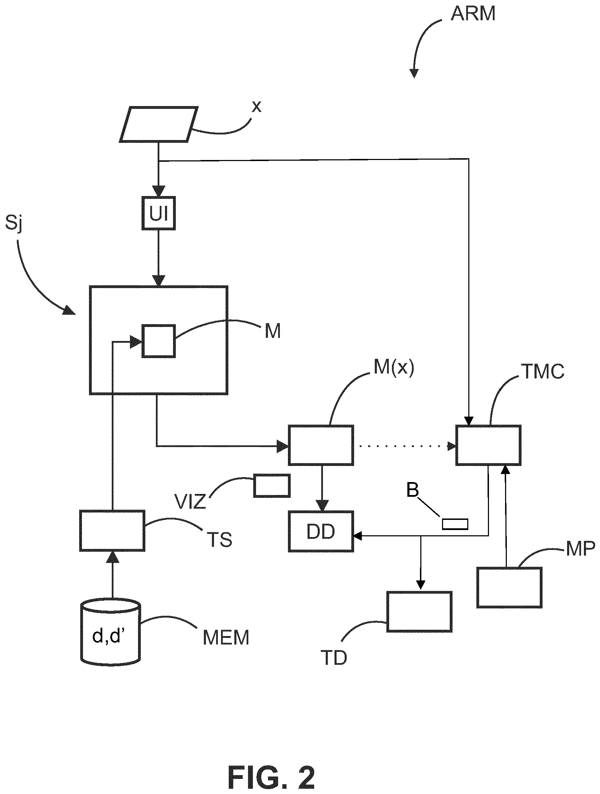

Reference is now made to Fig. 2, which illustrates in more detail operation of the trust management component TMC in connection with other components, as schematically shown in the Figure. The trust management component TMC may be used in a computing or data processing arrangement DPA, such as described in Fig. 1, or in other computing arrangement ARM, as needed. Whilst applications in the medical field are mainly envisaged herein, other applications outside clinical/medical practice are not excluded.

Service Sj may be used/accessed by a user through a computer device operable by a user, such as a laptop/desktop computer, a smart phone, a tablet or any other end device HW. The service Sj may be reliant on the trained machine learning model M. Based on user request x put through by user via the computing device, model M computes prediction M(x). The model input x may be put through by user through a suitable user interface UI. Model input x may represent, in embodiments, deployment data for processing by model M of a service. The prediction/model output, or deployment output M(x), may represents information user may need to support a medical decision which user is pursuing, for example, or may be needed by other services Sj. Thus, model output M(x) may relate to a result for use in therapy, diagnosis, planning, etc, or any other medical decision /task.

The model M is assumed to have been trained by a trained system TS based on training data d, and has optionally been tested on test data d'. However, the training system TS is merely shown in Fig. 2 for completeness. Thus, the training system as shown in Fig. 2 is not usually part of the trust management component TMC, whose operation may now be described broadly, and then in more detail in the following Figures.

The model input x is provided to the proposed trust management component TMC for processing by trained mode M in deployment or in testing, as the case may be. The model input x may be provided to trust management component TMC explicitly by user through user interface UI, or is automatically fetched when input x is fed into model M. The trust management component TMC processes the prediction input x as received to produce, based thereon, feedback data B. Such feedback data B may be brought to user's attention alongside the prediction M(x), or separately thereof. In addition, or instead, feedback data B may be feed to operational management system OMS for policing purposes, orchestration purposes, or any other management task. Broadly, feedback data B is configured to provide safety promoting context around the output M(x) consumed by user.

The prediction M(x) and the related feedback data B (referred herein for short at times simply as "feedback B") may be caused to be displayed by visualizer VIZ (see next Figure) in a graphics display on a display device DD. For example, the prediction M(x) sought by the user, and at least part of the feedback data B, may be displayed concurrently in a combined graphic display for example. In other configurations, the feedback B is displayed at different times than is the model output M(x). The feedback data B may be provided instead of, or in addition to displaying on display device, to another transducer TD. For example, feedback data may be sounded out, or may be used to activate visual aid other than the display device, as such lighting a lamp, a flash light/lamp, etc. In some cases, the feedback data is provided as an audio alarm or alert signal, of even haptically, as needed, and as will be explained in more detail below.

Broadly, the feedback data B is provided to alert the user on a possible trust concern in relation to the output M(x), thereby promoting safety. Thus, the feedback data B is configured so that user can better put prediction output M(x) as provided by model M into perspective. In yet more detail, the feedback B may relate to data as may be provided by certain metric providers MP. Such metric providers MP, as such and in themselves intended to provide same degree of safety promotion, may be operable to compute certain scores or measures in respect of the prediction M(x). Such metrics or measures may include a confidence measure *c*, and, optionally but preferably, an explainability measure p. The metric provider MP may be part of the arrangement ARM, DPA, but this may not necessarily be so. Metric provider MP may be an external entity, that provided the confidence and or explainability measure in relation to model M before. The measures may have been computed before by metric provider MP, and the so computed measures are then stored in some memory and retrieved when model M is used, or on user request. The metric provider MP may be an entity of a vendor who provided the model M for intended use the eco-system ES. Alternatively, and one or both of metrics p,c may be provided my model itself, as additional input (*M(x), p,* c) alongside the payload output *M(x)*, or at least some of the measures *p, c* may be inherent in the output M(x) itself, such as in some classification tasks.

The feedback data B is preferably computed in real time, alongside, or shortly after, the prediction M(x) is computed and is preferably output (eg, displayed)alongside the prediction M(x), or is otherwise caused to be brought to the attention of the user, such as by sound or haptics or in any other way. The feedback data B is provided in a dynamic manner, as it may change as the user requests a different prediction M(x'), based on different input data x' loaded into the machine learning model M for processing. Thus, feedback data B may vary and is updated with user input x processable by model M to provide output M(x).

Broadly, as will be detailed below, the trust management component TMC may be understood as a "virtual" instrumentation or "dashboard" that responds with real time feedback B to so foster safer use of ML model output M(x), in particular in clinical or other mission critical settings that use ML models for decision support for instance. The trust management component TMC avoids conferring to the user a false sense of security in respect of the computed prediction M(x). Such false sense of security may be at least partly conferred by the mentioned confidence measure. Ordinarily, the confidence measure c provides a quantification, for example in percentage terms, on the confidence that can be placed by user in the model output M(x) given its input x. Such a confidence measure may be shown alongside the prediction M(x). The confidence measure can be computed by statistical techniques, based on the training and/or test data, etc. Such initial confidence measure may be provided by the vendor of the machine learning model for example, as part of the model's specification. Ordinarily, such confidence measure may be static. In other cases, the initial, standard confidence may be provided by some model as a native output, together with the actual task output M(x) or inherent in same, as the case may be.

Thus, this in some applications, confidence measure *c* may be thought of as an initial, standard confidence measure, *c*=*c₀* provided by the ML model M vender for example, or as output by model alongside M(x), or inherent in it. A high confidence, such as for example 99%, may therefore make a user believe that the output prediction M(x) can be trusted safely. However, what has been found herein is that this initial confidence measure c, may need to be qualified, or calibrated, in view of the actual deployment data x put by a user to the model M for processing in deployment. Thus, the feedback data *B* computed by the trust management component TMC herein allows the user to better judge how much trust they can put into the confidence measure c=c₀ that may come with the model M or is provided as output as said above.

What is proposed herein is that the trust management component TMC dynamically adjusts or adapts, the said initial confidence measure *c₀*. Thus, the adjusted confidence measure c' produced herein by the trust management component may be dynamically updated, based on i) the actual current input data x provided by the user for processing by the model M, and ii) on aspects of the training and/or testing data on which model was trained or tested on, as will be described more fully below. Thus, the trust management component TMC optionally furnishes quasi-continuous user guidance in respect of how to interpret confidence measure that attaches to output M(x), as the input is changing. The proposed adaptation of the confidence measure may be further refined by making use of a graded per feature explainability measure *p* that may also be provided by metric provider MP, or may be obtained in any other way. The metric provider MP may be an analytical tool, indeed may be one of the services Sj, which user or model M may call on to compute confidence measure c and/or the said explainability measure *p,* to better understand how and why model *M* reached the conclusion *M(x)* it did, given input *x.*

In yet more detail, the trust management component TMC may be configured for statistical analysis. The mentioned adaptation/calibration of the confidence measure c may be based on the said statistical analysis. The trust management component TMC may establish in the said analysis whether or not the current input data x put before the model for processing is out-of-distribution (OOD) with respect to the training or testing data on which the model was trained or tested on. Thus, if there is statistical evidence that the current input x can be thought to be drawn from the same distribution as underlies the test or training data, the standard, initial confidence measure *c₀* may be trusted, and maintained as is. However, if there is a deviation, thus, if there is statistical evidence that the sample x put before the model for processing is not drawn from the same distribution as that of the training or test data, a case of out-of-distribution ("OOD") may be assumed and in this case the feedback data B may include an alert signal, caused to be brought to the attention of the user. The alert signal may be effected by the said transducer TD, or by display on a display device in suitable graphical symbology, text messaging, or any other form, to so inform the user on the OOD finding.

In addition thereto, or instead thereof, if OOD is so established by trust management component TMC, the feedback data may include the said adaption/calibration of the initially provided, eg displayed, confidence measure *c₀*. Thus, the feedback data B may include a new updated confidence measure *c'*, into which the initial measure c was changed into , on account of the established OOD situation. The so changed/adapted confidence measure *c'* may be displayed instead of, or alongside, the initial measure *c₀*, or the changed/adapted confidence measure may be otherwise brough to user's attention Various display options will be explored more fully below.

In general, OOD leads to the assumption that there are two different distributions, one according to which input *x* may be thought to be drawn, and another according to which the training or test data were drawn. Thus, when there is OOD, there may be a statistically relevant deviation between the, in same embodiments, at least two distributions. If OOD is established, the initial confidence measure *c₀* may be decreased by applying a penalty mark-down to the initial confidence measure, based on the statistical analysis. In particular, the penalty may vary: it may be larger/more severe, the larger the deviation between the two distributions, the one ( *P^{X}*) according to which input x was drawn and the one(s) *P^{D}* , *P^{D}*' according to which the training /or test data were drawn, respectively. The distribution in respect of input data *x* ~ *P^{X}* may be called herein the sample distribution. The distributions in respect of training or test data *d* ~ *P^{D}* or *d'~ P^{D}'*, respectively, may be referred to herein as the training distribution or test distribution, respectively. When reference is made herein to such "distributions", such reference relate to probability distributions, which may be used herein in any form, such as discrete or continuous. Any such distributions may be specified herein in terms of their density functions *P^{X}* = *∫ f^{x}*, *P^{D}* = *∫ f^{D}* , *P^{D}'* = *∫ f^{D}'*, or in terms of histograms, or in terms of cumulative distribution functions (CFD), or in any other form, parameterized or not. The statistical analysis may be parametric or non-parametric. The statistical analysis implementable by the trust management component TMC may be based on comparing the distributions and establishing a statistical distance Δ(*P^{X}*,*P^{D}*/*P^{D'}*) thereof, such as by using cross-entropy or Kullback-Leibler distance, or any other. If the distance is large, for example larger than a pre-defined threshold ε, the penalty is applied to the initial confidence measure c0. Thus, initial confidence measure c0 may be discounted by a fixed percentage value. Other calibration policies may be equally considered such a scaling down of c0, with a scaling action that varies with magnitude of deviation Δ. The scaling down may be proportional to the deviation Δ. The above described OOD determination may be simply referred to herein as the "OOD check" for short. Thus, trust component TMC runs OOD check with respect to input x, and based on this check, the confidence measure is calibrated, as needed.

Instead of using two such distributions, one such distribution for test or training data *d,d'* may be sufficient for the OOD check. The statistical test may be formulated instead so as to check whether the individual x currently put before the model M by user, can be considered a sample drawn from one of the distributions *P^{D}* = ∫ *f^{D}* , *P^{D}*' = ∫ *f^{D'}* that underlies the training or test data *d,d',* respectively. A Kolmogorov-Smirnov (KS) test or other may be used.

Thus, the statistical test of OOD check may be run i) individually for some or each sample x on its own vs *P^{D}*, *or P^{D}'*, or ii) may be done for sets of *x*'s and their distribution *P^{X}* against one of distributions *P^{D}*, *or P^{D}*' for test or training data *d,d',* respectively. The sample distribution in i) may be found for example at the site (eg hospital or other medical facility) where the model is used. Common statistical methodology may be used to establish at least in approximation any one the distributions *P^{X},p^{D}, P^{D}'.*

As user puts different inputs x into the model M for processing, the possibly adapted confidence measure c will change dynamically with the newly processed output M(x). As briefly mentioned above, when displaying in graphics display on display device DD, the initial confidence measure *c₀* may be displayed together with the calibrated confidence measure c'. For example, suitable graphical symbology, such as GUI widgetry (GUI control elements) may be used to represent in a dynamical-graphical rendition how the initial confidence "morphs" into the calibrated value c'. For example, a bar symbol may change length, corresponding to the calibration and the penalty applied. Alternatively, a virtual gauge/dial GUI element may be configured, with a virtual hand moving over the dial/gauge in proportion of the amount of calibration/re-scaling needed of the confidence measure. However, in simpler embodiments, only the adapted measure *c'* is displayed.

In case no OOD is found, thus, if there is "in-distribution" ("ID") established or at least this hypothesis is more likely or not refuted, a confirmatory message/signal may be shown, or no (other) feedback is provided, and the initial confidence measure will be displayed and remains as is. Preferably however, for the sake of better ergonomics, such confirmatory message or other signal is indeed brought to user's attention. The confirmatory message signal may confirm the current initial confidence measure c0. Thus, there is feedback in either case. This may serve to reassure user. The confirmatory signal may be color-coded modulation, such as text box which includes the current confidence measure, being made to flash in a suggestive color, such as in green, or the string "OK" is being phased in, etc. Numerous variations of such renditions are contemplated herein.

The above confidence measure calibration can be refined by using the explainability measure *p*, as will be described below in more detail.

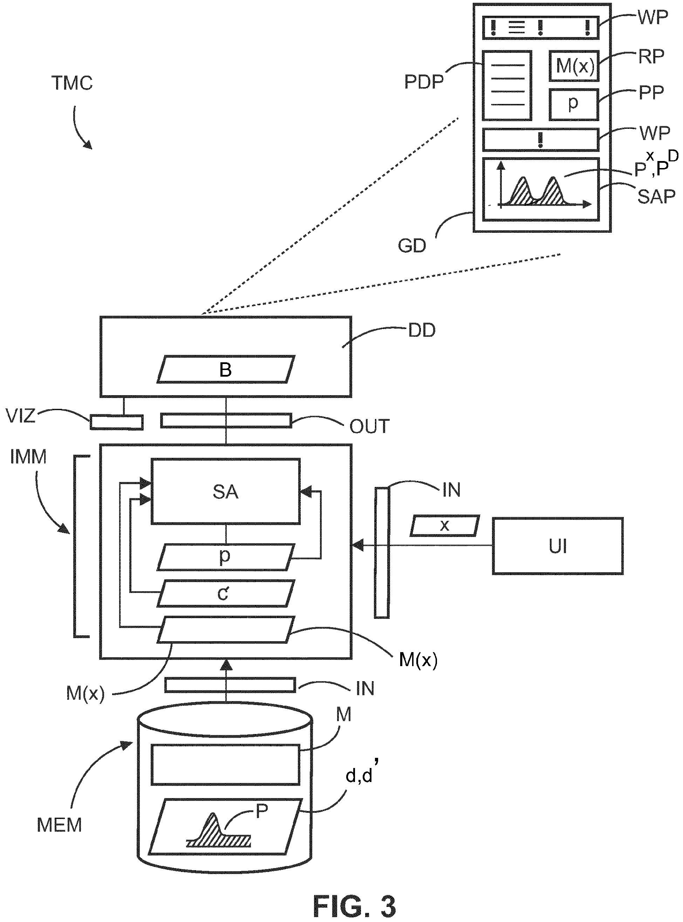

Reference is now made to Fig. 3 which shows in yet more detail features of the trust management component TMC.

Broadly, the trust management component TMC may be run on one or more computing entities. For example, the trust management component TMC may be installed as an add-on or application ("app") on the user's end device. Optionally, the trust management component is run on one or more computing devices remote from user's end-device, in a distributed computing and/or cloud-based architecture, as needed, such as explained above in Fig. 1. Indeed, the trust management component may be one of the services Sj, may be part of the operational management system OMS, or may be arranged in any other way.

For example, the mentioned statistical analysis may be outsourced to one or more servers or edge devices, services Sj, etc, possibly remote from the end device used by the user who requested M(x). Functions of the user's end device may be confined to controlling display and input/output operations, eg, for sending and/or receiving data through the communication system CS as needed. The device may merely request ML output M(x), in response to sending x down the network. A Cloud-setup may be used, where the more demanding workload, such as the said statistical analysis, is done by more powerful one or more computing devices such as servers, edge devices, etc as explained above in relation to Fig. 1 for Cloud-based solutions. Distributive computing may be used to balance the workload as needed. Thus, the execution of the model M to compute M(x), and/or the execution of trust management component may be done remotely from user device, on the same computing system, or on different ones, as needed and according to capacity. Network orchestrator such as operational management system OMA may coordinate resources to execute model M and/or trust component TMC. Network event handling equipment/circuitry may be used in such orchestration. Upon user requesting computation of M(x) provided input *x*, a copy of such input *x* is passed on to the trust component TMC to have feedback data B computed, based on the statistical analysis as explained above. Feedback is then passed back to user device for display, transducer TD operation etc, as explained above. Thus, in some embodiments, operation of trust management component TMC to compute feedback B may be invoked automatically on user requesting M(x). However, a decoupled version is also envisaged, where the user requests M(x), and then, via user interface UI, explicitly requests feedback data B by actively invoking trust management component TMC.

In embodiments, one or few training trust management components may be used by a larger number of plural services or devices, preferably with balanced workload across executing network nodes.

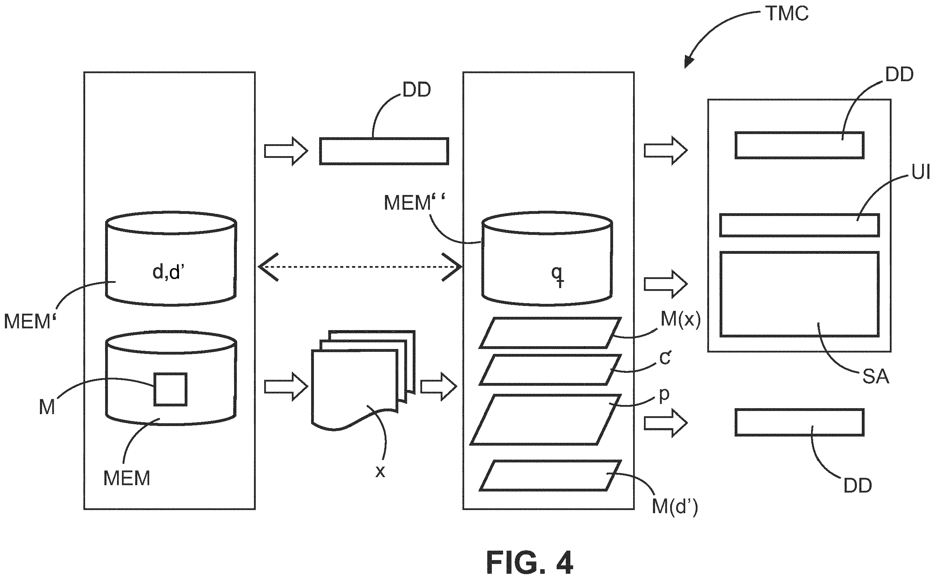

The training data *d* and/or test data *d'* may be accessed by trust management component TMC for accomplishing the statistical analysis. At least a part of training data *d* and/or test data *d'* and input x is receivable at input interface IN as system input for operation of trust management component TMC. In addition, but optionally and so configurable, data quality statistics *q* may be so accessed, as needed, and may be used to refine the calibration operation. The data quality statistics *q* measure the quality of training data *d* and/or test data *d'.* The training and/or test data *d,d'* may reside in one or more memories MEM. The component TMC may include a statistical analyzer SA which implements the statistical analysis to compute the calibrated confidence measure *c',* based on the input x that produced M(x), the training data *d* and/or test data *d',* and, optionally, on the initial confidence measure c0 as provided by metric provider MP (shown in Fig. 4).

In a further, and preferred embodiment, the statistical analysis by analyzer SA may be based on features φ=φ*j* that were identified by the explainability measure *p.* Thus, in such embodiments, such explainability measure *p* for x is also received at input interface IN of trust management component TMC. Broadly, the explainability measure p is configured to indicate features φ in the input data x that were put to the model M. Specifically, the explainability measure *p* is configured to indicate the extent or degree to which said one or more features contributed to the computed output M(x). Ordinarily, there are a number of features in x which together contribute to the output M(x). Some explainability measure algorithms can compute a feature graded or rated measure *p*, where plural features are shown ranked according to the respective contribution they each made to the output M(x). Thus, explainability measure p may be conceptualized as a list, such as a sequence tuple, *p* = *(p1,* ... *pj,* ... *, pN)*, where each *pj* measures the contribution of respective feature φj. The list features contributed more than other possible features in the input data *x.*

As there are usually a finite number *N* of dominant features φ*j*, there is a feature that contributed the most to the output M(x), such as for example φ1 in the above exemplary list (depending on the ordering of the list). Thus, the calibrated confidence c' is preferably based on establishing the above described OOD check with respect to the dominant feature φ1 as provided by the explainability measure *p.* In other words, the statistical analyzer SA analyses whether the dominant feature as identified by the explainability measure *p* can be said to be drawn from the same distribution as the training data *d* or test data *d'.* Thus, the above mentioned OOD check is now made with respect to the feature, rather than with respect to input data x globally, as a whole, which is also considered herein in simpler embodiments. In yet more refined embodiments, it is not necessarily only the dominant feature φ1 that is considered for the OOD check, but it may be the first *m-* features (m>1 for which the OOD check is run. The first *m-*dominant features may be used in weighted scheme to so provide a more nuanced OOD-assessment of the confidence measure calibration. Thus, the above mentioned probability distributions are now taken over the feature *φ* considered *P*^{*φ*(*X*)}*,P*^{*φ*(*D*)}*, P*^{*φ*(*D'*)}, where *φ()* is the features or combination of m-dominant features so considered.

Model input x that caused output M(x), and the initial confidence measure c0, optionally with the explainability measure *p*, are received by an optional intelligence monitoring module IMM of the trust component TMC. The module IMM may support and coordinate operation of statistical analyzer SA. Statistical analyzer SA uses a suitable statistical technique to establish the ODD risk, if any. If is risk exceeds a certain threshold ε, or based on a severity of ODD risk as may be established based on Δ, or based on any other penalty policy, the trust component (or its module IMM ) discounts, scales, marks-down, or otherwise modifies/penalizes, the standard initial confidence measure c0 to obtain c'. Whilst operation of the trust component is primarily envisaged for calibrating an existing, such as the said, standard measure c0, such is not necessarily required herein. Instead, a suitably calibrated confidence measure is produced from scratch.

The feedback data output *B* of the trust component TMC is provided through output interface OUT for further processing, such as for displaying on display device DD, and or for controlling the one or more transducers TD, for example to generate the alert or confirmatory signal, as the case may be. Thus, feedback data B may include the optionally calibrated (that is adapted) confidence measure c' or, if there is no reason to adjust the initial measure c0, the confirmatory signal may be sent as feedback data B. Optionally, no additional data is sent. In this case, the current confidence measure is displayed or is otherwise brought to the attention of the user, by highlighting of in any other graphical manner to articulate (by displaying or in any other way) its validity. Whilst the OOD-check based calibration operation was mainly explained above in relation to a down-mark penalty (a decrease) of the current, initial, confidence measure's value, such calibration may instead constitute an uplift, up-mark (increase) reward. For example, this may happen if a next input x' is considered after earlier input x, and the new input x's is no longer OOD. In this case, the updated confidence measure may revert to the earlier standard confidence measure that came with the model M, for example as provided by vendor, or is computed by model itself, or any other.

The upper right of Fig. 3 illustrates an optional virtual instrumentation, a dashboard, which supports the continuance guidance and feedback character of the proposed trust management component. A graphic display GD may be generated by visualizer VIZ and is caused to be displayed on one or more display devices DD, either separate from, or integrated into, user end device of user who uses model M to request M(x). The graphics display GD may be arranged as a GUI. It may comprise a number of, preferably interactive, graphics panes.

The panes may include a statistical analyzer SA panel where the relevant distributions may be shown as graphs, and how they may differ.

Warning panes WP may indicate in graphical or textual form, or in a combination thereof, when an out of distribution risk is established by analyzer SA. Instead, confirmatory indication may be indicated there. The warnings panes may be configured as the said bar element or the said virtual dial/gauge, to so indicate, in an ergonomic fashion, confidence measure changes. In simpler cases alert terminology (such as an exclamation mark "!") is displayed or "OK" is phased in, optionally flashing, etc. Appropriate color coding such as red or green, respectively may be used.

A result panel RP indicates prediction M(X). Optionally, it is also input x itself that may be shown in a view port.

A confidence panel CP shows the initial *c₀* and/or updated confidence measure *c'*.

An explainability panel PP may show the explainability measure *p*. Thus, in preferred embodiments, trust component supports a combined visualization of both, confidence measure *c*, *c*' and explainability measure *p*, in relation to the predication M(x).

Preferably, further metrics on data quality *q* may be shown in a data quality metrics pane PDP, as needed.

As mentioned earlier, the display is configured preferably for real time and dynamic operation in that it is in particular the confidence measure in panel CP that is updated as the new model input model x' is processed by the model to produce updated results M(x) as then displayable in the results panel RP.

The dashboard shown in the upper right of Fig. 3 may be integrated into user interface UI, which itself may be a graphics user interface. The user interface UI may include one or more elements that allow the user to load a desired model M into memory or otherwise select such model. In addition, or instead, the user interface UI may allow selecting the input data x for processing by the selected model M. The graphics display is updated whenever new model is loaded and executed to produce M'(x), and/or when new input x' is processed by whichever model M,M' is currently selected. Thus, the information in the graphics display GDP as supported by the trust management component TMC may be updated dynamically, once the user changes any one or both of the model and/or input request x. Thus, the trust management component may be doubly dynamic in that it responds to model selection and input x provided thereto.

Reference is now made to Fig. 4 which shows the operation of the trust management component in yet more detail.

On start-up, the trained model M may be held at least in parts in a data storage/memory MEM and is applied to input data x (deployment data or test data) as may be drawn in automatically, or may be provided by the user via user interface UI.

The model input x may relate to the clinical use case at hand. The model's prediction M(x), optionally together with initial model confidence measure c, and optionally with interpretability/explainability measure *p* (-> φ) is provided, eg by displaying the related features φ and/or the data sample(s) x that have been used by the model to make the final prediction M(x). The values *p, c₀* may be stored in a storage/memory. Optionally, data quality metrics *q* held in data storage /memory MEM" may be displayed for the training d and/or test data d'. In some embodiments, the set of the important (dominant) features φ and/or data sample x for the prediction is selected, either by user through UI or automatically as per the feature ranking. Statistical analyzer SA analyzes the selected ("important") features, and computes statistical results, by testing same against the feature distribution in the training data set *d* or test data set d', held one or more data storages/memories MEM'. Statistical tests may be used in the analysis as mentioned above in connection with Figs 2,3. The current statistical results as per the analysis, such a distributions *P^{X}, P^{D}, P^{D'}*, or its per-feature versions *P^{φ(X)}, P^{φ(D)}, P^{φ(D)'}*, are stored in memory. The results may then be evaluated, such as by comparing Δ the distributions using a statistical hypotheses test as mentioned earlier. Based on the analysis/evaluation, feedback data *B* is generated. Such may include recommendations on model confidence if the two data distributions are different or if input x cannot be said be drawn according to one of *P^{D}, P^{D'}* or *P^{φ(D)}, P^{φ(D)'}*. Such computing of feedback data *B* may include calibrating the initial confidence c into calibrated confidence *c',* which is then displayed or otherwise output via output port OUT. The feedback data *B* may include *c'* and, optionally, *c.*

The proposed trust management component TMC may be useful for instance if the model M was trained at a different site (third party, ML vendor etc) from where it is slated for use. The distribution *P^{D}* of the training data *d* at the site where the model was trained may be compared as mentioned above with the distribution *P^{X}* of the local dataset x, using any statistical standard tests (such as Kolmogorov-Smirnov ("KS") test, or others). If the difference in distributions is small (<ε), the initial/native confidence measure *c* is maintained. If the difference is larger than the set threshold ε for example, the initial confidence *c₀* is calibrated into the calibrated confidence c'. For example, a mark-down, proportional to the difference, may be used. Instead, the KS test or any other test may be used to check the hypotheses that x was drawn according to *P^{D}.* instead of using *P^{D},* the above test may be done for the test set d' and its distribution P^{D'}.

In embodiments, data quality metrics q may also be used or may be used instead of the above explained, to decide whether or not to calibrate confidence measure by applying the penalty mark-down. For example, if the explainability measure *p* is used, trust management component TMC assess for some or each of the *m*-most (*m*≥1) important features *φj* their data quality (DQ) as per metric *q* in the local dataset. Any suitable DQ metric *q* may be used for this. For example, for important features *φj* that have high bias, unacceptably high missing values, or are of low DQ in general in the current dataset {x}, a penalty mark-down is applied to the confidence.

Such penalty may be incremental for each such feature and proportional to the DQ degradation. In general, for each DQ, a related acceptability threshold *ε(q)* may be defined. If the DQ drops below this, a penalty is applied, which may vary with magnitude of the deviation |*ε(q)* - *q*|, such as may be proportional thereto. The factor of proportionality may be established based on domain knowledge as they may differ from application to application. In addition, such DQ may be established per feature φ or globally for the data x.

If DQ degradation in an important feature *φ* (as measured by their contribution as per explainability measure p) is deemed severe (for instance with changes in the data input over time, also known as "data drift"), the trust management component TMC triggers an alert, inviting a review of the training data, as the model performance can become unacceptable. A retraining may be needed. The penalties per feature and/or DQ metric *q* applied to obtain the calibrated confidence c' is preferably cumulative over some or all the assessed metrics and/or features.

As mentioned, whilst this confidence calibration may be carried out per site over some or all the collected deployment data {x}, the calibration of the confidence may be done per individual prediction M(x) for each or some input x rather, than for the collected data set {x} as a whole. Thus, in latter case, trust management component TMC assess the relevant elements q for a specific prediction - for instance if one or more important features *φ* are missing for the current data point x, the trust management component TMC issues feedback data to warn the user that the prediction M(x) may be less trustworthy (even incorrect). The data M(x) may be collected and reviewed. If that is not possible or inconvenient, or in at any rate, the calibrated confidence may be penalized reduced, and the user will may be warned by alert signal in the feedback data.

The result of the statistical analysis by analyzer SA may be visualized in the graphics display as explained above in relation to pane SAP. Next to the visual explanation showing the differences in data distribution, data quality *q* metric and/or interpretability measure p (of the first *m-*features φ), may be displayed in suitable visualization. This allows the user to better judge on which basis the confidence measure was calibrated/adjusted.

Additionally, and as an option, the trust management component TMC may provide user information on how to increase the confidence for a specific prediction M(x).For example, the trust management component may display any one of more of data quality *q* and result of the statistical analysis in terms of probability distributions in respect of training data and input sample(s) x, so that the user can assess whether for the inference /deployment, the model can be used safely.

The trust management component TMC may collect additional input data, based on which the calibrated confidence is adapted. For example, a number of different inference cases may be collected, which may then be used to added to the training data *d,* thus changing its distribution *P^{D}.*

The trust management component TMC may be operable in a monitoring mode as an option. Thus, trust management component TMC may monitor for data drift. Thus, this monitoring allows picking up changes over time with respect to the data distribution *P^{X}* and optionally their feature(s) φ. In case of significant changes (eg, based on thresholding ε), a respective alert may be triggered to review the data and/or the model M, retrain model, etc. These alerts can be provided to users and/or to model developers.

Whilst operation of trust management component TMC was explained above with main reference to input data x being a sample processed by model in deployment, input x may instead represent a sample from the test data d', *x* ∈ *d'*. Thus, the OOD check may be one of test sample vs training data. In this way, even out of deployment, an overall trustworthiness of a newly acquired model from a vendor may be checked before actual deployment. If there is OOD, there may be low confidence placed in the model as a whole, as the data on which the model was tested on has little bearing on the training data in such OOD situation. Thus, as used herein, the input x may relate to sample new deployment data, or to test data. Thus, the trust component may be used in deployment as mainly described above, or in addition or instead, in retrospect, to check trustworthiness of the existing stock of ML models in the current eco-system ES as maintained. Models M found not trustworthy in this manner, may be retired from the eco-system by operational management system OMS. For example, they may be slated for a retraining, or other quality checks, as needed. Thus, the trust management component TMC may be used to manage trust in deployment, or, retrospectively, of the ML model eco-system ES as a whole.

Whilst the metric provider MP may be under control of vendor or other QC (quality control) entity as mentioned earlier, it may be instead at the disposal of user. Thus, it may be user who may initiate computation of confidence measure co via metric provider MP. The metric provider MP is a computing arrangement, whose operation may be based on whichever algorithm for computing confidence measures, such as computing softmax variance, predictive entropy, mutual information, and averaging predictions over multiple models. Such methods may be used in particular with NN type models, but not only. Generally, confidence in ML may be classified into two classes: (1) epistemic uncertainty (2) aleatoric uncertainty. Epistemic uncertainty takes into account the uncertainty in the model parameters, without considering all the aspects related to the data. Aleatoric uncertainty studies the uncertainty due to data noise, e.g., class overlap, label noise, which cannot be mitigated by increasing the data sample size. In order to estimate epistemic uncertainty, Bayesian statics, such as deep ensembling and/or dropout, enables to retrieve uncertainty over the model weights by learning a distribution over them (instead of learning the weights). In fact, Bayesian models allows to include uncertainty by modelling posterior distribution of the model weights. Aleatoric uncertainty depends on the data and on the information that the *"data cannot explain".* When depending on the input data, aleatoric uncertainty can be predicted as a model output by the model itself as additional data, in addition to the output sought M(x) for the task at hand. Thus, in such confidence trained models, there is "enriched" output in the form (*M(x), c*)*,* rather than outputting merely M(x). Thus, in a classification task, output may be a label, whilst confidence c measures the confidence which can be attached to this label. In other approaches, confidence may be estimated as a model parameter or confidence is inherent in output M(x), such as when output is a percentage value (probability or score) of the classification of *x* into a label. Any such and other approaches for quantifying the initial confidence c (which may then be calibrated by trust component TMC as described herein) are envisaged herein in embodiments.

The proposed trust management component TMC allows calibrating any such initial confidence measure, whether user provided or provided by model M itself, or external entities. This is because such calibration as proposed herein is based on the actual model input x and the statistical OOD analysis with respect to training or testing data as mentioned above.

In general, function of the trust management component TMC is based on interaction/interplay of the concepts of explainable models (sometime dubbed "*xAI*") and model confidence. The trust management component TMC is configured for dynamic adaptation of the confidence measure, in case of input data *x* features φ not being sufficiently well represented in the training data *d* and/or test data *d.* In terms of user interaction, the trust management component TMC may support direct interaction, e.g. scaling or otherwise adjusting, the confidence measure. A quasi-continuous guidance on trust management is provided to user whilst they are using the model M for decision support.

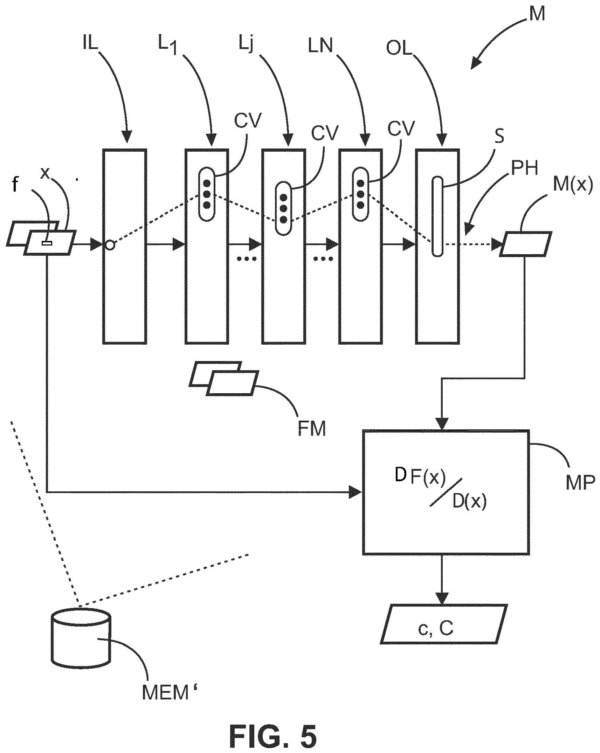

Reference is now made to Fig. 5 illustrates of operation of metric provider MP provider that provides explainability measure *p* as per one non-limiting embodiment, which may then be used to choose features φ in respect of which confidence measure c is calibrated into c', as explained herein above . Some explainability measures are based on gradient analysis as illustrated in Fig. 5 at the example of a neural network model type model, or other cascaded model, whose computational elements or nodes are arranged in a cascaded fashion across a sequence of layers data processing Lⱼ. The processed data is preferably spatial, such as an image, a medical image. M(x) may include a diagnosis. The NN in the example of Fig. 5 is of the convolutional type, with nodes arranged as convolutional operator CV. The layers have a deep architecture, with plural hidden layers in between input layer IL and output layer OL. Output layer OL may use a combiner layer ∑, such as one or more fully connected layers, as opposed to convolutional layers upstream. The model may be feedforward, so processing flow is in general form left to right in Fig. 5, but recurrent setups or LTSMs are not excluded, any neither are those with attention enabled layers, in particular for processing of sequential data. However, any model architectures described herein, such as the one in Fig. 5, are not limiting in any way, and are included herein for the purposes of illustration any example.

The metric provider MP may compute the explainability measure p as an explainability map, where each entry in *p* corresponds to a spatial element (eg, pixel, voxel, etc) in the input x applied to mode M. Such element may be an example of feature φ of input data x, such as an edge, or other in image feature. If a given element or feature φ in x, say φi, is subjected to variation (perturbance), the model *M* becomes a function *F* of such perturbation *θ*: *F_{φj,}*(*θ)* = *M(φⱼ*+/-*θ).* Expression "*M(φj*+/-*θ)"* is used herein is shorthand for output *M*(*x**), where *x*=*x**, expect for the position of feature *φj,* which is now perturbed by adding or subtracting θ at that position. The function *F* so defined may be referred to herein as the "auxiliary function". The metric provider MP is broadly operative to establish how this feature φj of *x* contributes to the output M(*x*). The contribution s of *φj* may thus be based on a perturbation analysis of *F*, such as *s*= *Δ(F(θ))*/*Δθ* , where *s* is a contribution measure for φj, such as numerical condition number or sensitivity, or as per any other error analysis method. For example, the higher the sensitivity *s*, the more important the considered feature φ in x is for output *M(x)*.

Fig. 5 illustrates this perturbation analysis of auxiliary function *F* by a processing path PH, extending from the feature position *φi* (that is being perturbed), to the associated output *M(φj*+/-*θ)*. Forward-propagation/back-propagation, or any other gradient based numerical techniques may be used to establish the response *ΔM(xj)* caused by Δθ in the perturbation analysis. For example, the gradient of *F* at φj may be output as the sensitivity s at cpj. The above can be repeated for some or each feature φi of x, to so built up the explainability measure *p* as the said map *p*=*pj.* The map may include p= pj = *s*(φj) values that correspond to feature locations φj in *x.* The map may be thresholded to establish the (*m*-) dominant features. Thus, as used herein, the explainability *p* is not necessarily a scalar, but may be higher dimensional, such as a vector, or, as here in Fig. 5, a matrix with size equal to data dimension of input *x.*

Fig. 5 is for illustration of a gradient based manner of computing explainability measure *p* for spatial data x. Non-gradient based approaches for explainability definition are not excluded. In addition, as mentioned briefly before, Fig. 5 is for illustration of a manner of computing explainability measure in particular for data with spatially correlated elements, such as measurements, eg imagery, where pixel/voxel values in a sufficiently small neighborhood are usually correlated. Other algorithms are also envisaged herein, with some being geared to deal with data that is not spatially correlated, such as is tabular data.

The following provides a brief account on explainability measure and related algorithms, any of which as envisaged herein in embodiments of trust management component TMC. Broadly, explainability measure algorithms may fall in two categories: (1) local and (2) global explanations. Local explanations target the explainability of a single prediction, while global explanations address the explainability of the complete model. Examples of (model agnostic) local explanations are feature importance-based methods, such as *"SHapley Additive explanations " ("SHAP")*, and *"Local Interpretable Model-Agnostic Explanations"* ("LIME"). For SHAP, see for example Nohara, Yasunobu, et al. in "Explanation of machine learning models using shapley additive explanation and application for real data in hospital", in "Computer Methods and Programs in Biomedicine", vol 214 106584 (2022). For LIME see Zhang, Yujia, et al. in " Why Should You Trust My Explanation? Understanding Uncertainty in LIME Explanations", arXiv preprint arXiv: 1904.12991 (2019). These and similar ML-explainability establishing methods try to find the most important features that produce a certain output. The idea behind is to provide an explanation that can demonstrate that model consider the important features.

Another type of explainability is provided by "rule-based" methods, such as "anchors". See for example T. Ribeiro et al in "Anchors: High precision model-agnostic explanations", conference proceedings, in "Association for the Advancement of Artificial Intelligence" (AAAI), Vol. 32, No. 1 (2018): *"Thirty-Second AAAI Conference on Artificial Intelligence* / *AAAI Technical Track: Human-AI Collaboration".* These methods use a single prediction to find rules based on input features in which the prediction does not change. The goal of this method is to create a minimal set of rules for the input features. Instead of finding rules, example-based methods, such as *"influence functions",* aim to explain the prediction using examples. Influence functions based explainability is described for example by *W.* Koh et al in " Understanding black-box predictions via influence functions", arXiv preprint, reference code arXiv:1703.04730 [stat.ML] (2020). In this way the user, e.g., the clinician, could use these examples and determine if the model is justified in using these training points to give the prediction.

Another explainability approach is based on "counterfactuals" concept. Counterfactuals provide recourse to affected individuals for high-stakes decisions. See for example S Wachter et al in "Counterfactual explanations without opening the black box: Automated decisions and the GDPR, arXiv, reference code arXiv:1711.00399 [cs.AI], 2018. The explanations given by these methods aim to explain what needs to be changed in the input to get a desired output. Counterfactuals can be used to assess if the model employs the right decision boundary for the prediction.

As said, any of the above mentioned methods for obtaining explainability measure *p* may be contemplated herein.

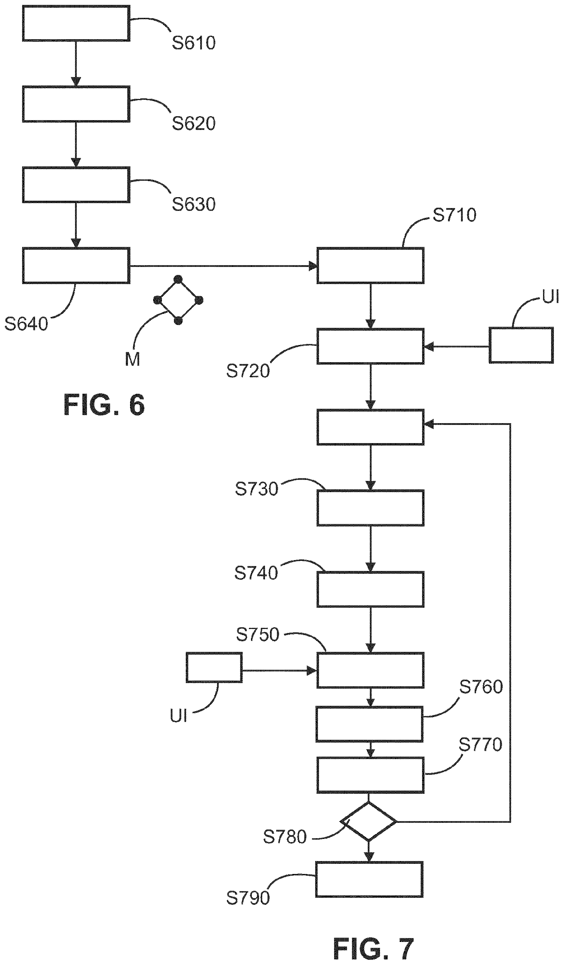

Reference is now made to Figs 6,7 which show flow charts of data processing methods as contemplated herein. Whilst the below described methods in Figs 6,7 relate to the above described trust management system TMC, it will be understood that the steps and methods below are not necessarily tied to the architecture described above, but may be understood as teachings in their own right.

Broadly, Fig. 6 relates to the training or the testing stage in relation to ML model M, whilst Fig. 7 relates to steps in the subsequent deployment stage where training model M is used. The Fig. 7 method may also be used to review test data vs training data.

Starting out first with the flow chart of Fig. 6, at step S610 training data is accessed and based thereon the model M is trained at step S620, using any suitable ML training method, such as supervised, self-supervised, semi-supervised, un-supervised, reinforced learning. Generally, in training, model parameters as adapted based on training data, using a training algorithm. The architecture of the model M can be at least in party any one of neural networks (NNs), such as in Fig. 5, or decision trees, regressive methods, clustering models, support vector machines (SVM), or any other.

Such training algorithm may be gradient-based. Backpropagation techniques may be used. Broadly, the training represents how the model ought to behave, and the parameter adaptation is done so that model returns the intended output as represented by the training data. Training may be a one-off operation (single cycle), or may be done repeatedly over multiple cycles. Then, after sufficient training cycles, the model ideally learned to generalize from the training data set, and return useful result also for test or deployment data. The learning of the mode is "encoded" in its adapted parameter thanks to the training algorithm. Performance of the model may however not always be as expected, with higher error rates than is acceptable for the set task. Such performance issues may be due to OOD situation as mentioned above, and the method proposed herein (see Fig. 7) is intended to address this by trust management, such as warning the user of the model's performance issues, if such may not be immediately apparent from the output the model has produced. The training algorithm may proceed iteratively. There may be double iterations in multiple loops: one loop iterates over training data samples, the other over model parameter adaptation for a given data item/sample. The training algorithm may be driven by a cost function or more generally, and objective function. The objective function produces output based on training data and training output produced by model. The parameters are adapted to improve output of objective function.

The model may be considered sufficiently trained based on a suitably formulated stopping condition, such as convergent behavior of objective function. The stopping condition may be based for example on the output returned by the objective function. Otherwise, user may manually abort training.

At step S630 the so trained model is optionally tested at step S630 based on testing data *d',* different form training data *d.* Testing data *d* is in general different in terms of face value from the testing data d, but both data should ideally be drawn according to the same distribution, which, however, may not be the case in some OOD scenarios as mentioned earlier.

At step S640, if a sufficient error rate is achieved in testing S630, the so trained model can be released for deployment at step S640.

Referring now to Fig. 7, in deployment, such as in clinical practice, the model M is received or at least accessed at step S710. For example, a service Sj may so receive , select or otherwise access the trained model. The trained model (in particular its trained parameters)) may be held in one or more data storages MEM, in the cloud, or residential, or in any other way.

At step S720 model input x is received. Input x may be loaded into the ML model M for processing there, to produce at step S730 prediction M(*x*), based on the provided input *x.* Such input *x* may be drawn in or harvested automatically, or may be provided via user via input UI, or in any other way.

At an optional step S740, an initial confidence measure *c* may be computed for the output M(x).

Optionally, but preferably in addition, an explainability measure *p* is computed at step S750 for output M(x).

The order or steps S740 and S750 are immaterial. In addition, the computing of the confidence measure c and/or of the explainability measure p may be done before providing the output M(x) at step S730, as needed. Thus, the confidence measure *c* and/or of the explainability measure *p are* mainly a function of input *x.*

At step S760, feedback data *B* is computed based on the input x, and optionally on the initially confidence measure c. Further, optionally and preferably, the feedback data B is further based on the explainability measure p.

In particular, the computing at step S760 of feedback data *B* may include performing a statistical data analysis. More particularly still, an OOD risk may be established at step S760 in the said statistical analysis, based on the input x provided for model to compute M(x), and the training and/or test data *d,d',* respectively, on which model was trained or tested on. Thus, it is established whether or not the input x is "out of distribution" (OOD) relative to training data d and/or test data d'. Preferably, OOD risk of x vs training data d is so established.

If it is (that is, if there is OOD risk above a threshold), the feedback data B is issued as an alert signal, which may be displayed as visualization on display device or is otherwise brought to the attention of the user by a suitable transducer. If there is no such OOD-risk, or such risk is low, an "in-distribution" (ID) situation of input x with respect to test or training data is concluded. In this case, no output is provided, or a confirmatory signal is provided, and brought to the attention of the user to reassure user.

In the OOD case, the feedback data B may particularly include a calibrated confidence measure *c'*, based on the initial confidence measure *c₀* The calibrated confidence measure *c*' is a modified version of initial confidence measure *c₀*. Thus, if OOD, the step S760 may include the calibration step , based on the established out of distribution risk and, optionally, on the prior computed initial confidence c. For example, calibration may be based on a severity of OOD. Severity of OOD may be measured by a deviation between probability distributions *P^{X},P^{D}* as mentioned above, and/or on an outcome of a statistical hypothesis test as may be done in the statistical analysis of step S760. The calibration step in step S760 may include adapting the initial confidence measure *c₀* into *c'*. The calibration step in step S760 may include adapting the initial confidence c in proportion or otherwise in concordance with the OOD severity. Alternatively, the calibration step in step S760 includes computing the calibrated measure from scratch.

Step S760 may include performing a statistical check to establish OOD risk, and optionally the severity of such risk. Such OOD severity may be quantified in different ways. In particular, probability distributions *P^{D}, P^{D'}* of training and/or test data, respectively, may be compared against a distribution *P^{X}* according to which input *x* was drawn. The two distributions may be compared by using a distance measure, to establish as statistically relevant deviation Δ, if any. The amount by which the confidence measure is calibrated may depend on this deviation Δ. The initial confidence measure may be decreased/scaled down, in proportion to a magnitude of the established deviation. The deviation may not need to be computed explicitly in terms of such distance function, such as Kullback-Leiber divergence, or other. Instead, a statistical test may be done at step S760 to establish feedback data. Such test may include the Kolmogorov-Smirnov ("KS") test, or any other statistical hypotheses test such as Cramér-von Mises test, Anderson-Darling test, Wilcoxon-Mann(-Whitney) test, etc, may be used instead. 0-hypotheses may be formulated such as *"There is OOD"* or *"There is ID*", as needed and convenient in the circumstance. Instead of comparing distributions *P^{X} vs P^{D}* or *P^{X}* vs *P^{D'}*, the hypothesis is tested whether x can be considered as drawn according to *P^{D}* or *P^{D'}*. Again, *x* is in general not as such part of training data, but may nevertheless be considered by the statistical test to be consistent with the statistical assumption that *D* and *x* have been drawn according to the same probability distribution which is then a case of *ID.* Otherwise, *OOD* may be concluded.

In particular, and in some embodiments, the feedback data *B* may be based on the explainability measure *p*, rather than on input x globally (the latter also envisaged in some alternative embodiments as above). The explainability measure *p* is preferably feature-graded as explained above. Thus, the measure relates to individual data features (structures, etc) of input data sample x. For example, if input sample x is spatial data, such as a medical image, such feature(s) φ may relate to different image features, image structures, image location/regions, course of edges, etc. Such image may be input into model M for diagnostic decision taking for example. If on the other hand, input data x is non-spatial, such as in tabular data, feature may relate to certain statistical descriptors of the data. At any rate, the above OOD risk may be established at step S670 per feature, such as for the most dominant feature, or for the first *m*-features dominant features, as may be determined/selected by user via user input.

The feedback data B may be displayed or otherwise provided to user's attention at step S770 or for processing by computing entity. The feedback data B may be so displayed, transmitted, disseminated, or notified, etc, together with the input x and/or output M(x), as needed.

At step S780 it is established whether new input data x is received, or new model M' (not shown) is loaded for querying. If yes, process flow returns to step S730, where the process starts over with above steps repeated. If it is determined that no new input or new model is received, the method terminates at step S790.

The feedback data provided at step S770 may preferably include providing the confidence measure, the initial/current one, and/or the updated one, in combination with the explainability measure p, in particular the one or more features so identified by *p*.
In embodiments, the feedback data may be provided, with or without such displaying, to the operational management system OMS, as described above at Fig. 1.

The feedback data, in particular the calibrated confidence measure, represents trust management data as user can more safely align their decision making in view of the model output.

The feedback data as provided may include an indication that retraining is suggested because of OOD risk.

In addition, by displaying the statistical deviation and/or the data quality metrics that led to the OOD, the user may be able to ascertain which additional training data may be needed to change the distribution in the current training data to as to decrease the deviation and/or to amend the lack of DQ, such as by seeking out additional training data, with less or no missing data instances, such as in tabular data. The statistical deviation may be displayed, for example, as CDFs or histograms of both distributions *P^{X}, P^{D}* for *x* and training data set *d* in the same diagram for example, with each distribution/histogram suitable annotated or color-coded or otherwise distinguished to be identifiable by user. Any other representation that allows assessing how to change the training data composition for better correspondence with composition of sample set *{x*} is also envisaged herein. In addition or instead, the needed composition may be established automatically, eg, as a specification of statistical /DQ metrics of the additional training data set needed for retraining.

Input data sample x may be deployment data as said earlier, but may instead represent test data. In this case, the OOD check at step S670 is one of test data vs training data, using probability distribution *P^{D'} vs P^{D}* in the statistical analysis.

It will be understood that the above method in Fig. 6 for trust management is mainly reliant on input x. Thus, theoretically, the method may be practiced without actually computing M(x), such as in retrospective applications as mentioned above, where an existing eco-system ES of models are assessed for trustworthiness of for other trust management purposes. However, in preferred embodiments, the method is practiced with computing prediction M(x), when x is input. In some embodiments, the trust management method in Fig. 6 may be triggered by such computation *of M(x).*

The input data may be spatial or non-spatial, as mentioned earlier. The input data may include text, imagery or other measurements, lab data, or any other as explained above at Fig. 1. The input data may be tabular. Thus, the model M may be configured either for processing of spatial or non-spatial data. The model may be based on an NN architecture for processing of spatial data. Convolutional NNs may be used for processing image data. The model may be configured for processing sequential data, such as seq2seq models. The model may be configured for natural language processing. The model may include a (self)attention mechanism. The model may be configured for processing of tabular data. In such case, decision tree models may be used. In some embodiments, such models for processing of tabular data may be based on decision tree methodology married up with gradient methods, in particular gradient boosting methods.

The above method(s) can be used for any machine learning model, such as those trained for supporting a clinical task, or a medical task more generally. For example, a prediction of reaction or presentation of patients in hospital wards, or in ICUs (intensive care units), may be envisaged herein in some embodiments. For example, in ICU embodiments, vitals are measured off patients, and put as input data x before the model M for processing. The output M(x) may indicate whether or not a medical emergency or incident is to be expected within a defined time period from now (that is, the point in time when the measurements x were collected), such as within the next hour, next 5 hours, within a day, etc.

With the proposed trust management method, any such model configured for predicting patient reaction, or for other mission critical applications, may be more safely operated, thanks to the feedback data, in particular thanks to the capability herein to calibrate confidence data, to better reflect the statistical relationship between input x and the model's training and/or test data. For example, staff planning, and equipment procurement or outsourcing may need to be reviewed if no incident is expected according to the model within the next hour say, but the calibrated confidence shows a very low such confidence for this, as such, welcome prediction. In this case, contingency provisions may be put into place, in case patient indeed passes out, or enters into a state of emergency, etc.

The (sub)components of the trust management system/component TMC may be implemented as one or more software modules, run on one or more general-purpose processing units PU such as a workstation associated with an imager, or other medical equipment.

Alternatively, some or all (sub)components of the trust management system/component TMC may be arranged in hardware such as a suitably programmed microcontroller or microprocessor, such an FPGA (field-programmable-gate-array) or as a hardwired IC chip, an application specific integrated circuitry (ASIC), integrated into medical equipment. In a further embodiment still, the trust management system/component TMC may be implemented in both, partly in software and partly in hardware.

The different (sub)components of the trust management system/component TMC may be implemented on a single data processing unit PU. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. System (TMC) for trust management in machine learning based data processing, comprising:
an interface (IN) for receiving system input data including model input data (x) processable by a machine learning model (M) into model output data M(x);
a statistical analyzer (SA) capable of computing feedback data, based on a statistical analysis of i) training data on which the model was trained, and ii) the model input data, wherein in the said feedback data is includable a confidence measure associable with the model output; and
an output interface (OUT) capable of providing the feedback data for facilitating trust management.

2. The system of claim 1, wherein the feedback data is so provided alongside at least a part of the model output data and/or model input data.

3. The system of claim 1 or 2, wherein the statistical analyzer (SA), in the said statistical analysis, capable to establish whether the training data and the model input data are out-of-distribution, OOD.

4. The system of 3, wherein the said system input data further includes a model output explainability measure associable with the model output, and wherein the said statistical analysis for OOD is based at least in part on the output explainability measure.

5. The system of any one of the previous claims, wherein the feedback data further includes the, or a, model output explainability measure.

6. The system of any one of the previous claims 4-5, wherein the explainability measure is configured to measure a contribution of a feature of the model input data to the model output data.

7. The system of any one of the previous claims, the statistical analyzer (SA) capable of computing the includable confidence measure as a calibrated confidence measure for the output data, based and the statistical analysis.

8. The system of claim 6 or 7, wherein the calibrated confidence measure for the output data is based on the, or a, feature in the input data to which the explainability measure pertains.

9. The system of any one of the previous claims, wherein the model input and/or output data includes medical data.

10. The system of any one of the previous claims, wherein the feedback data is provided as an alert or confirmatory signal, based on the statistical analysis.

11. The system of any one of the previous claims, a visualizer (VIZ) capable of visualizing at least a part of the feedback data on a display device (DD), or wherein at least a part of the feedback data is provided by a transducer (TD) other than a display device as a user perceivable feedback signal.

12. Arrangement (ARM, DPA) for data processing, comprising the system of any one of the preceding claims, and any one or more of i) the display device, ii) one or more metric providers (MP), providing the confidence and/or the explainability measure, iii) the display device (DD), iv) data storage on which is stored at least a part of the training data and/or the machine learning model, v) a training system (TS) on which the model was trained, vi) an operational management system (OMS) configured to ensure trust level across an ecosystem (ES) of machine learning models, based on the feedback data.

13. Method for trust management in machine learning based data processing, comprising:
receiving (S710) overall system input data including model input data (x) processable by a machine learning model (M) into model output data M(x);
computing (S760) feedback data, based on a statistical analysis of i) training data on which the model was trained, and ii) the model input data, wherein in the said feedback data is includable a confidence measure associable with the model output; and
providing (S770) the feedback data to a user of the model for facilitating trust management.

14. A computer program element, which, when being executed by at least one computing system, is adapted to cause the computing system to perform the method as per claim 13.

15. At least one computer readable medium having stored thereon the program element of claim 14.
